(19) **Europäisches Patentamt** / **European Patent Office** / **Office européen des brevets**

(11) **EP 4 612 106 B1**

(12) **EUROPEAN PATENT SPECIFICATION**

(45) Date of publication and mention
of the grant of the patent:
**04.02.2026 Bulletin 2026/06**

(21) Application number: **24754717.7**

(22) Date of filing: **09.08.2024**

(51) International Patent Classification (IPC):
*C04B 24/26* *(2006.01)*   *C08F 220/56* *(2006.01)*
*C09K 8/44* *(2006.01)*   *C09K 8/508* *(2006.01)*
*D21H 17/37* *(2006.01)*   *C08F 2/00* *(2006.01)*
*C04B 24/16* *(2006.01)*   *C04B 103/00* *(2006.01)*
*C04B 103/32* *(2006.01)*   *C04B 103/40* *(2006.01)*
*C04B 103/44* *(2006.01)*   *C09K 8/035* *(2006.01)*
*C09K 8/467* *(2006.01)*   *C09K 8/68* *(2006.01)*
*C09K 8/588* *(2006.01)*   *D21H 21/14* *(2006.01)*
*C11D 3/37* *(2006.01)*   *C09K 8/88* *(2006.01)*
*C02F 1/56* *(2023.01)*

(52) Cooperative Patent Classification (CPC):
(C-Sets available)
**C08F 220/56; C04B 24/163; C04B 24/2641;
C04B 24/2652; C09K 8/035; C09K 8/44;
C09K 8/467; C09K 8/588; C09K 8/68; C09K 8/88;
C11D 3/3715; D21H 17/37; D21H 21/14;** C02F 1/56;
C04B 2103/008;      (Cont.)

(86) International application number:
**PCT/EP2024/072657**

(87) International publication number:
**WO 2025/032252 (13.02.2025 Gazette 2025/07)**

(54) **PRECIPITATION POLYMERIZATION PROCESS FOR OBTAINING DEGRADABLE POLYMERS**

FÄLLUNGSPOLYMERISATIONSVERFAHREN ZUR HERSTELLUNG VON ABBAUBAREN
POLYMEREN

PROCÉDÉ DE POLYMÉRISATION PAR PRÉCIPITATION POUR L'OBTENTION DE POLYMÈRES
DÉGRADABLES

(84) Designated Contracting States:
**AL AT BE BG CH CY CZ DE DK EE ES FI FR GB
GR HR HU IE IS IT LI LT LU MC ME MK MT NL
NO PL PT RO RS SE SI SK SM TR**

(30) Priority: **09.08.2023 FR 2308611**

(43) Date of publication of application:
**10.09.2025 Bulletin 2025/37**

(72) Inventors:
- **FAVERO, Cédrick**
  **42160 ANDREZIEUX BOUTHEON (FR)**
- **BRAUN, Olivier**
  **42160 ANDREZIEUX BOUTHEON (FR)**
- **NICOLAS, Julien**
  **75794 PARIS CEDEX 16 (FR)**
- **LE, Dao**
  **75794 PARIS CEDEX 16 (FR)**

(73) Proprietors:
- **SNF SA**
  **42160 Andrezieux-Bouthéon (FR)**
- **Centre National de la Recherche Scientifique**
  **75794 Paris Cedex 16 (FR)**
- **Université Paris-Saclay**
  **91190 Gif-sur-Yvette (FR)**

(74) Representative: **Ipsilon**
Le Contemporain
**50 Chemin de la Bruyère**
**69574 Dardilly Cedex (FR)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

(56) References cited:
WO-A1-2023/078534     WO-A2-2023/075696
CN-A- 103 467 728       JP-A- 2000 038 595
JP-A- H11 228 633

• DAI GUOXIONG ET AL: "Biodegradable poly(ester)-poly(methyl methacrylate) copolymer for marine anti-biofouling", PROCESS IN ORGANIC COATINGS, vol. 124, 1 November 2018 (2018-11-01), NL, pages 55 - 60, XP093131141, ISSN: 0300-9440, DOI: 10.1016/j.porgcoat.2018.08.003

• BINGHAM NATHANIEL MARTIN: "Synthesis and Polymerisation of Novel Monomers for Radical RingOpening Polymerisation", DEPARTMENT OF CHEMISTRY FACULTY OF ENGINEERING AND PHYSICAL SCIENCES UNIVERSITY OF SURREY, 21 December 2020 (2020-12-21), pages 1 - 278, XP093131533, Retrieved from the Internet <URL:https://openresearch.surrey.ac.uk/esploro/outputs/doctoral/Synthesis-and-Polymerisation-of-Novel-Monomers/99605823402346> [retrieved on 20240214]

• UNDIN JENNY ET AL: "Copolymerization of 2-Methylene-1,3-dioxepane and Glycidyl Methacrylate, a Well-Defined and Efficient Process for Achieving Functionalized Polyesters for Covalent Binding of Bioactive Molecules", BIOMACROMOLECULES, vol. 14, no. 6, 15 May 2013 (2013-05-15), US, pages 2095 - 2102, XP093130983, ISSN: 1525-7797, DOI: 10.1021/bm4004783

• BINGHAM NATHANIEL M. ET AL: "Thioester-Functional Polyacrylamides: Rapid Selective Backbone Degradation Triggers Solubility Switch Based on Aqueous Lower Critical Solution Temperature/Upper Critical Solution Temperature", vol. 2, no. 8, 14 August 2020 (2020-08-14), pages 3440 - 3449, XP055868414, ISSN: 2637-6105, Retrieved from the Internet <URL:https://pubs.acs.org/doi/pdf/10.1021/acsapm.0c00503> DOI: 10.1021/acsapm.0c00503

Remarks:
The file contains technical information submitted after the application was filed and not included in this specification

(52) Cooperative Patent Classification (CPC): (Cont.)
C04B 2103/32; C04B 2103/408; C04B 2103/44; C09K 2208/12; C09K 2208/28

C-Sets
C08F 220/56, C08F 220/1804;
C08F 220/56, C08F 220/34

**Description**

## TECHNICAL FIELD OF THE INVENTION

The present invention relates to a method for preparing a degradable polymer by precipitation polymerization, said polymer and the use thereof.

## PRIOR ART

Polyacrylamides are water-soluble synthetic polymers with a wide range of applications such as wastewater treatment, paper making, cosmetics, textiles, agriculture, construction, oil recovery or mining.

Due to their polymeric nature, i.e. their high molecular weight, polyacrylamides are considered inert and non-toxic, both for the environment and for humans, with a low risk of bioaccumulation in plants. However, the regulation of chemicals and the monitoring of their possible evolution in nature apply to these compounds. Thus, the specifications to be complied with are increasingly restrictive for manufacturers and vary according to applications and countries. The degradation of these polymers in the environment and their metabolization by microorganisms therefore remains a major research topic in order to meet the ecological challenges of our time.

There are several ways to degrade polyacrylamides, divided into two processes: abiotic degradations and biotic degradations, also called biodegradation.

Abiotic transformations include, among others, mechanical, chemical and photochemical degradations that can be forced or occur automatically in nature. They make it possible to reduce the molecular weight of the polymer by breaking the chains into increasingly smaller fragments until oligomers are obtained (polymers of very small sizes having a number of repeating units not exceeding a few dozen).

Biotic transformations include biological processes, i.e. the digestion of oligomers by microorganisms such as fungi, bacteria or even enzymes. At the end of this biodegradation, the polymer was completely degraded and metabolized.

Biodegradable polymers of methyl methacrylate and 2-methylene-1,3-dioxepane, and their synthesis in dioxane, have been reported (Dai Guoxiong et al. "Biodegradable poly(ester)-poly(methyl methacrylate) copolymer for marine anti-biofouling", Process In Organic Coatings, vol. 124, 2018, pages 55-60).

CN 103 467 728 describes a biodegradable amphoteric polymer and its use in the biomedical field.

JP H11 228633 describes polymers of 2-methylene-1,3-dioxepane, for example polymers of 2-methylene-1,3-dioxepane and N,N-dimethyl acrylamide. These polymers are prepared by polymerization in solution.

WO 2023/078534 teaches a biodegradable polymer and its synthesis by polymerization in solution.

Polymers of cyclic ketene acetals have been reported (Bingham "Synthesis and Polymerisation of Novel Monomers for Radical RingOpening Polymerisation", Thesis, 2020, pages 1-278).

WO 2023/075696 describes terpolymers comprising a (meth)acrylate monomer, a cyclic ketene acetal monomer and a monomer with a hydrophilic group.

Polymers of 2-methylene-1,3-dioxepane and glycidyl methacrylate have been reported (Undin et al. "Copolymerization of 2-Methylene-1,3-dioxepane and Glycidyl Methacrylate, a Well-Defined and Efficient Process for Achieving Functionalized Polyesters for Covalent Binding of Bioactive Molecules", Biomacromolecules, vol. 14, no. 6, 2013, pages 2095-2102).

Thioester-functionalized polyacrylamides have been reported Bingram et al. "Thioester-Functional Polyacrylamides: Rapid Selective Backbone Degradation Triggers Solubility Switch Based on Aqueous Lower Critical Solution Temperature/Upper Critical Solution Temperature", Acs Applied Polymer Materials, vol. 2, no. 8, 2020, pages 3440-3449).

JP 2000-038595 describes a polymer of acrylic acid and 2-methylene-1,3-dioxepane.

The prior degradation of polymers is essential to initiate biodegradation. It is indeed necessary that the polymer or oligomer fragment can cross the cell barrier in order to be metabolized. This is applicable to all polymers and it has been shown that the rapid metabolization of polyacrylamides, as is the case in standardised tests, is only possible for a degree of polymerisation of less than 7 (heptamer).

Abiotic transformations can be accelerated by manufacturers, but the various existing treatments (mechanical or chemical) involve additional steps leading to logistics going in the opposite direction of ecological issues with, in particular, equipment, the use of products, energy consumption and higher costs.

Other solutions are known to improve the degradation rate, in particular the incorporation into the polymer chain of so-called "weak points" corresponding to the inclusion of particular chemical functions leading to the fragmentation of the main hydrocarbon chain of the polymer. This fragmentation reaction can be carried out rapidly under relatively soft conditions similar to those encountered in nature.

The incorporation of the weak point can be achieved by adding an additional monomer inducing a hydrolysable function, for example a cyclic ketene acetal. The polymerization of a cyclic ketene acetal is carried out by radical ring opening polymerization (rROP), thus making it possible to integrate an ester function into the structure of the polymer, a function which is easily hydrolyzable.

The main problem for these monomers inducing a hydrolyzable function is that they are sensitive to hydrolysis, hydrolysis which can in particular be induced by solvents (this is then referred to as solvolysis), i.e. the solvent will itself attack and solvolyze the hydrolyzable function. It is thus necessary to use organic solvents during the polymerization of such monomers. The solvents used are thus often harmful to the environment and to the manipulators. Conventional and well-known solvents are, for example, benzene, dichloromethane or the mixture of cyclohexane and ethyl acetate. In addition, it is difficult to obtain high molecular weights due to the hydrolysis of the hydrolyzable function.

Thus, there is a need to find greener and environmentally friendly production routes for obtaining high molecular weights.

The Applicants have discovered a novel polymerization process which makes it possible to obtain polyacrylamide derivatives of high molecular weight with better incorporation of the monomers with a hydrolyzable function, leading to better degradation of said polymers. The method of the invention also allows better integration of the monomers inducing a hydrolyzable function within the polymer.

The polymerization method, the polymers and their utilisation are in line with the principle of environmental awareness and the impact of industry and mankind on the planet. The method of the invention allows a greener and environmentally friendly production route without the use of harmful solvents. The better integration of the monomers inducing a hydrolyzable function makes it possible to obtain polymers with better degradability, thus reducing the environmental impact of the applications using it.

## SUMMARY OF THE INVENTION

The present invention relates to a process for the preparation of a polymer by radical polymerization by precipitation of specific monomers, in particular a cyclic monomer.

More specifically, it is a process for the preparation of a polymer by radical polymerization by precipitation of at least two monomers A and B:

- the monomer A being chosen from: non-ionic hydrophilic monomers, anionic hydrophilic monomers, cationic hydrophilic monomers, zwitterionic hydrophilic monomers, hydrophobic monomers and mixtures thereof; and
- the monomer B being a cyclic monomer chosen from: cyclic ketene acetals, thionolactones and mixtures thereof.

The polymerization solvent used for the polymerization is an alcohol (one or more) containing from 1 to 4 carbon atoms and contains at least 0.5% by weight up to 10% by weight of water relative to the total weight of the polymerization solvent. Water (polymerization solvent) includes deionized water, fresh water, brines saturated with salts and brines unsaturated with salts

Due to the combination between the choice of the polymerization solvent and the polymerization technique (precipitation polymerization) and the nature of the monomers (specific cyclic monomer), the invention makes it possible to obtain polymers with better integration of the cyclic monomers giving access to a range of polymers of high molecular weight that can be easily degraded.

The present invention further relates to the polymer obtained according to this method.

The present invention also relates to the use of this polymer in: hydrocarbon recovery (oil or gas); drilling wells; cementing wells; stimulation of hydrocarbon wells (oil or gas), for example hydraulic fracturing; conformance; diversion; open, closed or semi-closed circuit water treatment; treatment of fermentation broth; sludge treatment; construction; paper or cardboard manufacture; batteries; wood treatment; treatment of hydraulic composition (concrete, cement, mortar and aggregates); mining; formulation of cosmetic products; formulation of detergents; textile manufacture; geothermal energy; manufacture of diapers; or agriculture.

Finally, the present invention also relates to the use of this polymer as a flocculant, coagulant, binding agent, fixing agent, viscosity reducing agent, thickening agent, absorbent agent, friction reducing agent, draining agent, filler retention agent, dehydrating agent, conditioning agent, stabilising agent, film-forming agent, sizing agent, superplasticizing agent, clay inhibitor or dispersant.

## DESCRIPTION OF THE INVENTION

In the description of the invention, the term "polymer" designates the polymer resulting from the method according to the invention. This polymer has an improved degradability compared to the polymers obtained from conventional processes.

The term "hydrophilic monomer" should be understood to mean a monomer that has an octanol-water partition coefficient, $K_{ow}$, less than or equal than 1, in which the partition coefficient $K_{ow}$ is determined at 25°C in an octanol-water mixture with a volume ratio of 1/1, at a pH of between 6 and 8.

The term "hydrophobic monomer" should be understood to mean a monomer that has an octanol-water partition coefficient, $K_{ow}$, greater than 1, in which the partition coefficient $K_{ow}$ is determined at 25°C in an octanol-water mixture with a volume ratio of 1/1, at a pH of between 6 and 8.

The octanol-water partition coefficient, $K_{ow}$, represents the ratio of concentrations (g/L) of a monomer between the octanol phase and the aqueous phase. It is defined as follows:

$$K_{ow} = \frac{[monomer]_{octanol}}{[monomer]_{water}}$$

By "water-soluble", this means a compound (for example a polymer or a monomer) which gives an aqueous solution without insoluble particles when it is dissolved while stirring at 25°C and with a concentration of 10 g.l$^{-1}$ in deionised water.

"X and/or Y" should be understood to mean "X", or "Y", or "X and Y".

The invention also includes all possible combinations of the various embodiments disclosed, whether they are preferred embodiments or given by way of example. Furthermore, when ranges of values are indicated, the limit values are included in these ranges. The disclosure also includes all of the combinations between the limit values of these ranges of values. For example, the ranges of values "1-20, preferably 5-15" imply disclosure of the ranges "1-5", "1-15", "5-20" and "15-20" and the values 1, 5, 15 and 20.

By "improved degradability", it is meant that the dispersity of the fragments of polymers obtained after hydrolysis of the polymer is less than 5.0, preferably less than 4, more preferably less than 3, and even more preferably less than 2.5.

By "reaction medium", it is meant all of the monomers A and B, the polymerization solvent(s), the branching agent(s) and the transfer agent(s).

**Polymerization method**

Precipitation polymerization consists of polymerization of monomers soluble in a solvent (polymerization solvent) while the polymer obtained is insoluble therein, and precipitates. It is usually a white precipitate. It can be isolated easily using the usual separation, evaporation and drying methods. The polymerization solvent may be removed by filtration or distillation.

The polymerization solvent is a mixture of water and at least one alcohol containing from 1 to 4 carbon atoms. It is preferably a mixture of water and an alcohol chosen from ethanol, 1-propanol, 2-methyl-1-propanol, tert-butanol, 1-butanol, 2-butanol, , and mixtures thereof. Water may be deionized water, fresh water, a brine saturated or unsaturated with salts, for example an ammonium sulfate brine. The polymerization solvent is preferably tert-butanol and 0.5% up to 10% by weight of water.

The polymerization solvent comprises 0.5% up to 10% by weight of water relative to the total weight of the polymerization solvent, preferably up to 5% by weight of water. The polymerization solvent comprises 0.5% by weight or more of water relative to the total weight of the polymerization solvent, more preferably 1% by weight or more.

The polymerization solvent consists of:

(i) from 90% to 100% by weight of at least one alcohol containing from 1 to 4 carbon atoms, preferably from 90 to 99.5%, more preferably from 95 to 99%, and
(ii) from 0.5 to 10% by weight of water more preferably from 1 to 5%,

with respect to the total weight of the polymerization solvent.

The $C_1$-$C_4$ alcohol is preferably tert-butanol.

The polymerization solvent advantageously consists of from 95 to 98% of a $C_1$-$C_4$ alcohol (preferably t-BuOH) and from 2 to 5% of water, by weight relative to the total weight of the polymerization solvent.

Advantageously, the active material represents from 5% to 30% by weight relative to the total weight of the reaction medium, more preferably from 10% to 20% by weight. The active material comprises the monomers, the branching agent(s) and the transfer agent(s).

The polymerization according to the invention is a radical polymerization. For monomer B, it is more particularly a radical polymerization by ring opening.

Ring opening polymerization (ROP) is a polymerization method in which polymerization occurs following the ring opening of a cyclic monomer.

Radical ring opening polymerization (rROP), implemented for monomer B, combines the advantages of ring opening polymerization and radical polymerization. It is thus possible to prepare polymers carrying heteroatoms in the backbone (main polymer chain), while benefiting from the ease and robustness of a radical polymerization method.

Radical polymerization includes free radical polymerization using UV, azo, redox or thermal initiators.

The polymerization reaction is advantageously initiated by introducing a free-radical initiator.

The polymerization initiator(s) used are advantageously chosen from compounds which dissociate into radicals under the polymerization conditions. In certain cases, it is advantageous to use mixtures of various polymerization initiators, for example, mixtures of redox catalysts and of azoic compounds.

Examples of free-radical priming agents which may be cited are the oxidizing agent-reducing agent pairs with, among the oxidizing agents, cumene hydroperoxide or tertiary butylhydroxyperoxide, and among the reducing agents, the persulphates such as sodium metabisulphite and the Mohr salt. Azoic compounds such as 2,2'-azobis(isobutyronitrile), 2,2'-azobis(2-methylbutyronitrile) and 2,2'-azobis(2-amidinopropane) hydrochloride can also be used in the same way as peroxide compounds such as benzoyl peroxide, tert-butyl hydroperoxide or lauroyl peroxide. The initiator is preferably an azoic compound.

According to the invention, the quantity of initiator is advantageously comprised between 1 and 100,000ppm by weight relative to the total weight of the monomers, preferably between 50 and 50,000ppm by weight, more preferably between 100 and 30,000ppm by weight, and even more preferably between 500 and 20,000ppm by weight.

According to the invention, the polymer may have a linear, branched, star-shaped, comb-shaped, dendritic or block structure. These structures can be obtained by selecting the initiator, the transfer agent, the polymerisation technique such as the controlled radical polymerisation called raft (Reversible Addition Chain Transfer), NMP (Nitroxide Mediated Polymerisation) or ATRP (Atom Radical Transfer Polymerisation), of the incorporation of structural monomers, of the concentration.

The radical polymerization of the monomers (in particular by ring opening for the monomer B) is advantageously carried out at a temperature of between 10 and 90°C, preferably between 25 and 80°C, more preferably between 40 and 60°C.

At the end of the polymerization, the polymer is recovered in the form of solid particles. The size of the particles of the polymer is advantageously in the range 5 nm to 5 mm, preferably in the range 50 nm to 5 mm, more preferably in the range 100 nm to 2 mm, and even more preferably in the range 200 $\mu$m to 1 mm. It may in particular be in the range 50 nm to 1 mm, or in the range 500 $\mu$m to 5 mm, or in the range 5 $\mu$m to 1 mm, or in the range 100 $\mu$m to 1 mm.

The term "particle form" is understood to mean in powder form, in the form of beads or a mixture, of regular size (or not) and spherical (or not).

The term "particle size" means the number-average size of the polymer particles. It corresponds to the largest dimension, for example the diameter for spherical particles, measured preferably with a laser measuring device using the conventional techniques which are part of the knowledge of the person skilled in the art. For example, a Malvern Mastersizer, the MS2000, for example, could be used for this purpose. An apparatus of this type can be used to measure, by laser diffraction, the particle-size distribution of particles in a liquid medium or in solid form, preferably in a multiphase suspension.

The feasibility of this type of precipitation polymerization may optionally be ensured by the presence of specific surfactants or polymeric agents giving the suitable fluidity to the dispersion medium.

Polymeric agents are low molecular weight polymers that make it possible to increase the amount of polymer that can be obtained in the reaction medium by dispersing the polymer particles formed.

The polymeric agent advantageously has a molecular weight of between 500 and 100,000g/mol, preferably between 1,000 and 50,000g/mol, more preferably between 2,000 and 15,000.

In one particular embodiment, the polymerization is carried out in the presence of at least one surfactant in order to stabilize the reaction medium. The surfactant(s) advantageously have an HLB of less than 15, preferably between 9 and 13.

The Hydrophilic Lipophilic Balance (HLB) of a chemical compound is a measure of its degree of hydrophilicity or lipophilicity, determined by calculating the values of the different regions of the molecule, as described by Griffin in 1949 (Griffin WC, Classification of Surface-Active Agents by HLB, Journal of the Society of Cosmetic Chemists, 1949, 1, pages 311-326).

Advantageously, the quantity of surfactant is comprised between 0.2 and 20% by weight with respect to the total weight of the reaction medium, preferably between 1 and 10% by weight.

The surfactant may be non-ionic, anionic, cationic, amphoteric, or zwitterionic. Preferably, it is a non-ionic surfactant. The surfactant(s) are advantageously chosen from ethoxylated surfactants; PEG diacrylate (polyethylene glycol); ethoxylated fatty alcohol type ethers; saccharide esters; polyhydric alcohol esters; betaine esters; esters prepared from alcohol of the glycerol, diglycerol or triglycerol type or from other alcohols such as saccharides such as maltitol or sorbitol; and mixtures thereof.

The present invention further relates to the polymer obtained according to the method of the invention.

**Polymer**

The polymer according to the invention is a synthetic polymer comprising (advantageously consisting of) at least:

- a monomer A; and
- a cyclic monomer B.

The polymer may be water-soluble, water-swelling, or a superabsorbent. Preferably, the polymer is water-soluble.

The polymer is obtained by radical polymerization by precipitation of at least two monomers A and B:

- the monomer A being chosen from: hydrophilic non-ionic monomers, hydrophilic anionic monomers, hydrophilic cationic monomers, hydrophilic zwitterionic monomers, hydrophobic monomers and mixtures thereof; and
- the monomer B being a cyclic monomer chosen from: cyclic ketene acetals, thionolactones and mixtures thereof.

The polymerization solvent used for the precipitation polymerization is an alcohol containing from 1 to 4 carbon atoms and 0.5% up to 10% by weight of water relative to the total weight of the polymerization solvent.

The polymer according to the invention may be water-soluble, water-swelling, or superabsorbent. Preferably, it is water-soluble.

Depending on the applications, the nature of the polyacrylamides changes as well as their monomeric composition and the percentages of the monomers constituting them. The aim of the invention is to be able to replace any polyacrylamide with an equivalent polyacrylamide having improved degradability and equivalent or better performance. Thus, the invention is not limited to a monomeric percentage.

**Monomer A**

The monomer A used in the invention is chosen from hydrophilic non-nionic monomers, hydrophilic anionic monomers, hydrophilic cationic monomers, hydrophilic zwitterionic monomers, hydrophobic monomers and the mixtures thereof.

*Non-ionic Hydrophilic Monomer*

Advantageously, the hydrophilic non-ionic monomer or monomers that can be used in the invention are chosen, in particular, from the group comprising water-soluble vinyl monomers such as acrylamide, methacrylamide, N-alkylacrylamides, N-alkylmethacrylamides, N,N-dialkylacrylamides (for example N,N-dimethylacrylamide or N,N-diethylacrylamide), N,N-dialkylmethacrylamides, alkoxylated esters of acrylic acid, alkoxylated esters of methacrylic acid, N-vinylpyrrolidone, N-methylolacrylamide, N-vinylformamide (NVF), N-vinylacetamide, N-vinylimidazole, N-vinyl succinimide, acryloyl morpholine (ACMO), glycidyl methacrylate, glyceryl methacrylate, diacetone acrylamide, hydroxyalkyl (meth)acrylate, thioalkyl (meth)acrylate, hydroxy alkyl acrylates, hydroxy alkyl methacrylates, and mixtures thereof. Of these non-ionic monomers, the alkyl groups are advantageously $C_1$-$C_5$, and more advantageously $C_1$-$C_3$. They are preferably linear alkyls. Preferably, the hydrophilic non-ionic monomer is acrylamide.

*Anionic hydrophilic monomer*

Advantageously, the hydrophilic anionic monomer(s) that may be used in the scope of the invention may be chosen from a broad group. These monomers may have vinyl functions (advantageously acrylic, maleic, fumaric, malonic, itaconic, or allylic), and contain a carboxylate, phosphonate, phosphate, sulphate or sulphonate group, or another anionically charged group. Examples of suitable monomers include acrylic acid; methacrylic acid; dimethylacrylic acid; itaconic acid; $C_1$-$C_{22}$ itaconic acid semi-ester; itaconic anhydride; itaconamide; crotonic acid; acryloyl chloride; maleic acid; fumaric acid; undecanoic acrylamido acid; 3-acrylamido-3-methylbutanoic acid; maleic anhydride; strong acid monomers having, for example, a sulphonic acid or phosphonic acid function, such as vinylsulphonic acid, vinylphosphonic acid, allylsulphonic acid, methallylsulphonic acid, 2-methylidenepropane-1, 3-disulphonic acid, 2-sulphoethylmethacrylate, sulphopropylmethacrylate, sulphopropylacrylate, allylphosphonic acid, styrene sulphonic acid, 2-acrylamido-2-methylpropanesulphonic acid (ATBS), 2-acrylamido-2-methylpropane disulphonic acid; water-soluble salts of these monomers such as their alkali metal salts (distinct from the crystalline form of the sodium salt of 2-acrylamido-2-methylpropanesulphonic acid), alkaline-earth metal salts or ammonium salts; and mixtures thereof. Preferably, the hydrophilic anionic monomer(s) is acrylic acid and/or its salts.

In one particular embodiment of the invention, the hydrophilic anionic monomer(s) may be salified. It may also be a mixture of acid form and salified form, for example a mixture of acrylic acid and acrylate.

By salified, it is meant the substitution of a proton of at least one acid function of the -R(=O)-OH type (with R = P, S or C) of the anionic monomer by a metal or ammonium cation to form a salt of the -R(=O)-OX type (X being a metal cation or an organic cation). In other words, the non-salified form corresponds to the acid form of the monomer, for example -C(=O)-OH in the case of the carboxylic acid function, whereas the salified form of the monomer corresponds to the form -C(=O)-O$^-$ X$^+$, X$^+$ corresponding to an alkaline or ammonium cation. The salification of the acid functions of the polymer may be partial or total.

The salified form advantageously corresponds to the salts of alkali metals (Li, Na, K, etc.), alkaline-earth metals (Ca, Mg, etc.) or ammonium (for example the ammonium ion or a tertiary ammonium). The preferred salts are sodium salt.

The salification may take place before, during or after polymerization.

*Cationic hydrophilic monomer*

Advantageously, the cationic hydrophilic monomer(s) that can be used in the invention are chosen from monomers derived from vinyl-type units (advantageously acrylamide, acrylic, allylic or maleic), these monomers having a phosphonium, tertiary ammonium or quaternary ammonium function.

Diallyldialkyl ammonium salts, like diallyl dimethyl ammonium chloride (DADMAC); acidified or quaternized dialkyl-aminoalkyl(meth)acrylamide salts, like for example methacrylamido-propyl trimethyl ammonium chloride (MAPTAC), acrylamido-propyl trimethyl ammonium chloride (APTAC); acidified or quaternized dialkyl-aminoalkyl acrylate salts, like quaternized or salified dimethylaminoethyl acrylate (DMAEA); acidified or quaternized dialkyl aminoalkyl methacrylate salts like quaternized or salified dimethylaminoethyl methacrylate (DMAEMA); acidified or quaternized N,N-dimethyl-lallylamine salts; acidified or quaternized diallylmethylamine salts; acidified or quaternized diallylamine salts; vinylamine obtained by hydrolysis (basic or acid) of an amide group -N(R$^2$)-CO-R$^1$ with R$^1$ and R$^2$ being, independently, a hydrogen atom or an alkyl chain of 1 to 6 carbons, for example, vinylamine coming from the hydrolysis of vinylformamide; vinylamine obtained by Hofmann degradation; and their mixtures can be cited, in particular and in a non-limiting manner. Advantageously, the alkyl groups are C$_1$-C$_3$.

A person skilled in the art will know how to prepare the quaternized monomers, for example by means of an R-X-type quaternization agent, R being an alkyl group and X being a halogen or a sulfate.

By "quaternization agent", this means a molecule being able to alkylate a tertiary amine.

The quaternization agent can be chosen from among dialkyl sulfates comprising 1 to 6 carbon atoms or alkyl halides comprising 1 to 6 carbon atoms. Preferably, the quaternization agent is chosen from among methyl chloride, benzyl chloride, dimethyl sulfate or diethyl sulfate. Furthermore, the present invention also covers DADMAC, APTAC and MAPTAC monomers in which the counterion is sulphate, fluoride, bromide or iodide instead of chloride.

*Zwitterionic hydrophilic monomer*

Advantageously, the hydrophilic zwitterionic monomer or monomers may be a derivative of a vinyl-type unit (advantageously acrylamide, acrylic, allylic or maleic), this monomer having a amine, tertiary ammonium or quaternary ammonium function and a carboxylic (or carboxylate), sulphonic (or sulphonate) or phosphoric (or phosphate) acid function. Mention may be made, in particular and in a non-limiting manner, of dimethylaminoethyl acrylate derivatives, such as 2-((2-(acryloyloxy)ethyl) dimethylammonio) dimethylammonio) ethane-1-sulphonate, 3-((2-(acryloyloxy)ethyl) dimethylammonio) propane-1-sulphonate, 4-((2-(acryloyloxy)ethyl) dimethylammonio) butane-1-sulphonate, [2-(acryloyloxy)ethyl] (dimethylammonio) acetate, dimethylaminoethyl methacrylate derivatives, such as 2-((2-(methacryloyloxy) ethyl) dimethylammonio) ethane-1-sulphonate, 3-((2-(methacryloyloxy) ethyl) dimethylammonio) propane-1-sulphonate, 4-((2-(methacryloyloxy) ethyl) dimethylammonio) butane-1-sulphonate, [2-(methacryloyloxy)ethyl] (dimethylammonio) acetate, dimethylamino propylacrylamide derivatives, such as 2-((3-acrylamidopropyl) dimethylammonio) ethane-1-sulphonate, 3-((3-acrylamidopropyl) dimethylammonio) propane-1-sulphonate, 4-((3-acrylamidopropyl) dimethylammonio) butane-1-sulphonate, [3-(acryloyloxy) propyl] (dimethylammonio) acetate, dimethylamino propyl methylacrylamide derivatives such as 2-((3-methacrylamidopropyl) dimethylammonio) ethane-1-sulphonate, 3-((3-methacrylamidopropyl) dimethylammonio) propane-1-sulphonate, 4-((3-methacrylamidopropyl) dimethylammonio) butane-1-sulphonate and [3-(methacryloyloxy)propyl] (dimethylammonio) acetate and mixtures thereof.

*Hydrophobic Monomer*

Hydrophobic monomers with a coefficient partition K$_{ow}$ greater than 1 can also be used in the preparation of the polymer according to the invention. They are preferably chosen from the following list: (meth)acrylic acid esters with an alkyl, arylalkyl and/or ethoxylated and/or propoxylated chain; (meth)acrylamide derivatives with an alkyl, arylalkyl or dialkyl and/or ethoxylated and/or propoxylated chain; cationic allyl derivatives having an alkyl, arylalkyl or dialkyl chain and/or an ethoxylated and/or propoxylated chain; hydrophobic anionic or cationic (meth)acryloyl derivatives; and anionic or cationic monomeric (meth)acrylamide derivatives carrying a hydrophobic chain. The hydrophobic monomers may comprise halogen atoms, for example chlorine.

Of these hydrophobic monomers:

- the alkyl groups are preferably $C_3$-$C_{20}$, and more preferably $C_3$-$C_8$. The $C_6$-$C_{20}$ alkyls are preferably linear alkyls whereas the $C_3$-$C_5$ alkyls are preferably branched,
- the arylalkyl groups are preferably $C_7$-$C_{25}$, and more preferably $C_7$-$C_{15}$,
- the ethoxylated chains preferably comprise 6 to 100 -$CH_2$-$CH_2$-O- groups, and more preferably 10 to 40,
- the propoxylated chain preferably comprise 1 to 50 -$CH_2$-$CH_2$-$CH_2$-O- groups, and more preferably 1 to 20.

When the polymer is water soluble, it advantageously comprises less than 5 mol% of hydrophobic monomers and the quantity thereof is adjusted in order for the polymer to remain soluble in water.

In a preferred embodiment according to the invention, the polymer does not comprise hydrophobic monomer.

**Cyclic Monomer B**

The cyclic monomer B is chosen from: cyclic ketene acetals, thionolactones and mixtures thereof.

The cyclic ketene acetal is advantageously chosen from: 2-methylene-1,3-dioxepane (MDO), 5,6-benzo-2-methylene-1,3-dioxepane (BMDO), 2-methylene-4-phenyl-1,3-dioxolane (MPDL), 2-methylene-1,3,6-trioxocane (MTC), and mixtures thereof. Preferably, it is 2-methylene-1,3-dioxepane (MDO).

Advantageously, the quantity of cyclic ketene acetal(s) in the polymer is comprised between 5 and 30 mol%, with respect to the total quantity of monomers in the polymer, preferably between 5 and 20 mol%.

The thionolactone is advantageously chosen from: dibenzo[c,e]oxepine(7H)-5-thione (DOT), ε-thionocaprolactone, 3,3-dimethyl-2,3-dihydro-5H-benzo[e][1,4]dioxepine-5-thione (DBT) and mixtures thereof. Preferably, it is 3,3-dimethyl-2,3-dihydro-5Hbenzo[e][1,4]dioxepine-5-thione.

Advantageously, the quantity of thionolactone(s) in the polymer is comprised between 5 and 20 mol%, with respect to the total quantity of monomer in the polymer, preferably between 5 and 15 mol%.

**Branching agent and chain transfer agent**

The polymer according to the invention may comprise a branching agent.

The branching agent is advantageously chosen from:

- structure agents, being able to be chosen from the group comprising polyethylenically unsaturated compounds (having, as a minimum, two unsaturated functions) different from monomer A, like for example, vinyl functions, in particular, allylic or acrylic, and, for example, methylene bis acrylamide (MBA), triallyamine, or tetraallylammonium chloride or 1,2 dihydroxyethylene bis-(N-acrylamide) can be cited,
- compounds having at least two epoxy functions,
- compounds having at least one unsaturated function and an epoxy function,
- macroinitiators such as polyperoxides, polyazoics and transfer polyagents, such as polymercaptan polymers, and polyols,
- functionalized polysaccharides,
- water-soluble metal complexes composed:

    * of a metal of valence greater than 3 such as, as an example and in a non-limiting manner, aluminum, boron, zirconium, or also titanium, and
    * of a ligand carrying a hydroxyl function.

**In** a preferred embodiment, the branching agent is chosen from branching agents having a hydrolyzable function, in particular ester, in other words, the branching agent is advantageously a labile branching agent.

A labile branching agent is a branching agent that can be degraded in the presence of certain heat conditions and/or over time, after being incorporated into the polymer structure. The storage conditions of the polymer, the temperature, the presence of electrolytes can cause cleavage of the bonds in the labile branching agent.

The labile branching agent is advantageously chosen from diamine diacrylamides and diamine methacrylamides such as piperazine diacrylamide; acrylate esters; methacrylate esters; ethylene glycol diacrylate; polyethylene glycol (PEG) diacrylate; trimethylopropane trimethacrylate; ethoxylated trimethylol triacrylate; ethoxylated pentaerythritol tetracrylate; vinyl esters of di-, tri- or tetrafunctional acids; allylic esters of di-, tri- or tetrafunctional acids; and mixtures thereof. The labile branching agent is preferably chosen from water-soluble diacrylates such as PEG 200 diacrylate, PEG 400 diacrylate, PEG 600 diacrylate, PEG 1000 diacrylate, ethylene glycol diacrylate, diethylene glycol diacrylate, trethylene glycol diacrylate, tetraethylene glycol diacrylate, and polyfunctional vinyl derivatives of a polyalcohol such as ethoxylated trimethylol (9-20) triacrylate.

When the polymer is water-soluble and comprises a branching agent, the polymer remains soluble in water. A person skilled in the art knows how to adjust the quantity of branching agent and, possibly, the quantity of transfer agent needed to obtain this result.

In one particular embodiment, the polymer comprises no branching agent.

In one particular embodiment, the polymer may comprise a transfer agent.

The transfer agent is advantageously chosen from among methanol; isopropylic alcohol; sodium hypophosphite; calcium hypophosphite; magnesium hypophosphite, ammonium hypophosphite; formic acid; sodium formiate; calcium formiate; magnesium formiate; potassium formiate; ammonium formiate; 2-mercaptoethanol; 3-mercaptopropanol; glycol dithiopropylene; thioglycerol; thioglycolic acid; thiohydracrylic acid; thiolactic acid; thiomalic acid; cysteine; aminoethanethiol; thioglycolates; allyl phosphites; allyl mercaptans; like n-dodecyl mercaptan; sodium methallysulfonate; calcium methallysulfonate; magnesium methallysulfonate; potassium methallysulfonate; ammonium methallysulfonate; alkyl phosphites like tri alkyl ($C_{12}$-$C_{15}$) phosphites, di-oleyl-hydrogenophosphites, dibutyl phosphite; dialkyldithiophosphates like dioctyl phosphonate; tertiary nonylmercaptan; 2-ethylhexyl thioglycolate; n-octyl mercaptan; iso-octylthioglycolate; 2-ethylhexyl thioglycolate; 2-ethylhexyl mercaptoacetate; polythiols; and mixtures thereof. Preferably, it is sodium hypophosphite or sodium formiate.

In one particular embodiment, the polymer comprises no transfer agent.

**Molecular weight**

The polymer according to the invention may have a molecular weight covering all applications in which polyacrylamides may be used. Thus, the polymer according to the invention may have a molecular weight of between 500g/mol and 50,000g/mol, or between 50,000 and 100,000g/mol, or between 100,000 and 500,000g/mol, or between 500,000 and 1,000,000g/mol, or between 1,000,000 and 3,000,000g/mol, or between 3,000,000 and 5,000,000g/mol, or between 5,000,000 and 10,000,000g/mol, or between 10,000,000 and 30,000,000g/mol, or else greater than 30,000,000g/mol. This is the mean molecular weight by weight.

The molecular weight is advantageously determined from the intrinsic viscosity of the polymer. The intrinsic viscosity can be measured by methods known to a person skilled in the art and can be calculated from the reduced viscosity values for different polymer concentrations by a graphical method consisting in plotting the reduced viscosity values (y-axis) against the concentration (x-axis) and extrapolating the curve to zero concentration. The intrinsic viscosity value is plotted on the y-axis or using the least-squares method. The molecular weight can then be determined using the Mark-Houwink equation:

$$[\eta] = K.M^{\alpha}$$

[$\eta$] represents the intrinsic viscosity of the polymer as determined by the solution viscosity method.
K represents an empirical constant.
M represents the molecular weight of the polymer.
$\alpha$ represents the Mark-Houwink coefficient.
K and $\alpha$ depend on the particular polymer-solvent system.

The invention also concerns a polymer, advantageously water-soluble, obtained by radical polymerisation by precipitation of at least two monomers A and B:

- the monomer A being chosen from: non-ionic hydrophilic monomers, anionic hydrophilic monomers, cationic hydrophilic monomers, zwitterionic hydrophilic monomers, hydrophobic monomers and mixtures thereof; and
- the monomer B being a cyclic monomer chosen from: cyclic ketene acetals, thionolactones and mixtures thereof;

the polymerization solvent is an alcohol containing from 1 to 4 carbon atoms and containing 0.5% up to 10% by weight of water relative to the total weight of the polymerization solvent.

Use

The present invention also relates to the use of this polymer in: hydrocarbon recovery (oil or gas); drilling wells; cementing wells; stimulation of hydrocarbon wells (oil or gas), for example hydraulic fracturing; conformance; diversion; open, closed or semi-closed circuit water treatment; treatment of fermentation broth; sludge treatment; construction; paper or cardboard manufacture; batteries; wood treatment; treatment of hydraulic composition (concrete, cement, mortar and aggregates); mining; formulation of cosmetic products; formulation of detergents; textile manufacture; geothermal energy; manufacture of diapers; or agriculture.

Finally the present invention also relates to the use of this polymer as a flocculant, coagulant, binding agent, fixing agent, viscosity reducing agent, thickening agent, absorbent agent, friction reducing agent, draining agent, filler retention agent, dehydrating agent, conditioning agent, stabilising agent, film-forming agent, sizing agent, superplasticizing agent, clay inhibitor or dispersant.

The invention and the advantages procured thereby will be better understood upon reading the following examples provided for illustration purposes and not intended to limit the scope of the invention.

**EXAMPLES**

List of abbreviations:

AMD: Acrylamide
DMSO: Dimethyl sulfoxide
MDO: 2-methylene-1,3-dioxepane
V-70: 2,2'-Azobis(4-methoxy-2,4-dimethylvaleronitrile)
DMAEA: [2-(acryloyloxy)ethyl]trimethylammonium chloride
ATBS: 2-Acrylamideo-2-Methylpropane Sulfonic Acid

**Accelerated hydrolysis procedure**

In a 5 ml vial equipped with a magnetic stirrer, 5 mg of a final polymer (polymer whose degradation is analysed) is dissolved in 1 ml of sodium hydroxide solution (5% by weight in water). The mixture is then stirred for 24 hours at ambient temperature. The solution comprising the polymer is then cooled and 1.5 ml of an aqueous HCl solution (1M) are then added. The resulting solution is then dried at 40°C under vacuum to give a white powder. The degraded polymer is analyzed by SEC chromatography.

Measurement for the final polymer:

- Instrument: SEC

   * Columns: PL aquagel-OH MIXED-H 300 x 7.5 mm; bead diameter 8 $\mu$m; molar mass range 6,000-10,000,000 g/mol, preceded by a PL aquagel-OH MIXED-H column, 50 x 7.5 mm; ball diameter 8 $\mu$m -

- Method:

   * Temperature: 40°C
   * Mobile phase: DMSO, 100 mM LiBr + 0.36% by weight of 2,6-di-tert-butyl-4-methylphenol (BHT)
   * Flow rate: 0.7 mL/min
   * Detection: Triple detection system (Malvern Viscotek TDA/GPCmax) with:

- Differential refractive index detector;
- Low angle and right angle light scattering detector;
- Differential viscometer detector.

Measurement for the degraded polymer:

- Instrument: SEC

   * Columns: PL aquagel-OH MIXED-H 300 x 7.5 mm; bead diameter 8 $\mu$m; molar mass range 6,000-10,000,000 g/mol, preceded by a PL aquagel-OH MIXED-H column, 50 x 7.5 mm; ball diameter 8 $\mu$m;

- Method:

    * Temperature: 40°C
    * Mobile phase: water, 100mM NaCl and 0.02% by weight of $NaN_3$
    * Flow rate: 0.7 mL/min
    * Detection: Triple detection system (Malvern Viscotek TDA/GPCmax) with:

- Differential refractive index detector;
- Low angle and right angle light scattering detector;
- Differential viscometer detector.

**Synthesis protocol**

Polymer 1 - Polymerization in solution in t-BuOH/water = 85/15% by weight

8.4 mmol of AM, 8.4mmol of MDO, 0.06mmol of V-70, and 8.23g of t-BuOH comprising 15 weight% of water (t-BuOH/water = 88/12% by weight) were added to a 50 mL roundbottomed flask equipped with a mechanical stirrer, a thermometer, a condenser and with a gaseous argon dip tube. The medium is bubbled with argon, to remove the dissolved oxygen, for 30 minutes at 15°C. The medium is then heated to 40°C for 2 hours under stirring. After cooling to ambient temperature, the polymer is recovered by precipitation in acetone. Finally, the polymer is dried at 40°C under vacuum for 24 hours. The result is polymer 1.

Polymer 2 - Precipitation polymerization in t-BuOH/water = 97.5/2.5% by weight

8.4mmol of AM, 8.4mmol of MDO, 0.06mmol of V-70, and 8.23mL of t-BuOH comprising 2.5 weight% of water (t-BuOH/water = 97.5/2.5% by weight) were added to a 50mL roundbottomed flask equipped with a mechanical stirrer, a thermometer, a condenser and a gaseous argon dip tube. The medium is bubbled with argon, to remove the dissolved oxygen, for 30 minutes at 15°C. The medium is then heated to 40°C for 2 hours under stirring. A white precipitate is observed corresponding to the polymer. The polymerization solvent (t-BuOH/water) is then removed using a rotary evaporator with oil heated to 90°C and a reduced pressure of 100 mbar. The polymer is dried at 40°C under vacuum for 24 hours. The result is polymer 2.

The synthesis protocol of polymers 1 (solution) and 2 (precipitation) are repeated but with different polymer compositions.

The results are summarized in Table 1.

Table 1: Degradation results of polymers 1 to 6

| Polymer | Process | Polymerization solvent | Mw of the polymer $(g/mol^{-1})$ | Polymer degradation Mw / %Mw lost (%) |
|---|---|---|---|---|
| Polymer 1 AM/MDO 50/50 mol% | Solution | t-BuOH/water = 89/11% by weight | 18 000 | 12 000 / -33% |
| Polymer 2 AM/MDO 50/50 mol% | Precipitation | t-BuOH/water = 97.5/2.5% by weight | 860 000 | 82 000 / -91% |
| Polymer 3 AM/DMAEA/MDO 42.5/42.5/15 mol% | Solution | t-BuOH/water = 89/11% by weight | 24 000 | 20 000 / -17% |
| Polymer 4 AM/DMAEA/MDO 42.5/42.5/15 mol% | Precipitation | t-BuOH/water = 97.5/2.5% by weight | 720 000 | 100 000 / -86% |
| Polymer 5 AM/ATBS/MDO 40/40/20 mol% | Solution | t-BuOH/water = 89/11% by weight | 21 200 | 15 000 / -29% |
| Polymer 6 AM/ATBS/MDO 40/40/20 mol% | Precipitation | t-BuOH/water = 97.5/2.5% by weight | 1 230000 | 143 000 / -88% |

The polymer obtained according to the method of the invention degrades much more (greater %Mw lost) than when it is obtained in solution. It can be seen from this results that the process of polymerization plays a major role on the integrity of the molecular weight (Mw) of the final polymer. The process according to the invention allows the obtention of high molecular weight degradable polymers.

## Claims

1. Method for the preparation of a polymer by radical polymerization by precipitation, in a polymerization solvent, of at least two monomers A and B:

   - the monomer A being selected from the group consisting of: non-ionic hydrophilic monomers, anionic hydrophilic monomers, cationic hydrophilic monomers, zwitterionic hydrophilic monomers, hydrophobic monomers and mixtures thereof; and
   - the monomer B being a cyclic monomer selected from the group consisting of: cyclic ketene acetals, thionolactones and mixtures thereof;

   the polymerization solvent being an alcohol containing from 1 to 4 carbon atoms and containing at least 0.5% by weight to up to 10% by weight of water relative to the total weight of the polymerization solvent.

2. Method according to claim 1, *characterized* **in that** the alcohol containing from 1 to 4 carbon atoms is selected from the group consisting of: ethanol, 1-propanol, 2-methyl-1-propanol, tert-butanol, 1-butanol, 2-butanol, and mixtures thereof.

3. Method according to any one of the preceding claims, *characterized* **in that** the polymerization solvent is a mixture of water and tert-butanol.

4. Method according to any one of the preceding claims, *characterized* **in that** the polymerization solvent consists of from 95 to 98% of a $C_1$-$C_4$ alcohol and from 2 to 5% of water, by weight relative to the total weight of the polymerization solvent.

5. Method according to any one of the preceding claims, *characterized* **in that** the radical polymerization by precipitation is initiated by an azoic compound.

6. Method according to any one of the preceding claims, *characterized* **in that** monomer B is a cyclic ketene acetal selected from the group consisting of: 2-methylene-1,3-dioxepane, 5,6-benzo-2-methylene-1,3-dioxepane, 2-methylene-4-phenyl-1,3-dioxolane, 2-methylene-1,3,6-trioxocane, and mixtures thereof.

7. Method according to any one of claims 1 to 6, *characterized* **in that** the monomer B is a thionolactone selected from the group consisting of: dibenzo[c,e]oxepine(7H)-5-thione, ε-thionocaprolactone, 3,3-dimethyl-2,3-dihydro-5H-benzo[e][1,4]dioxepine-5-thione and mixtures thereof.

8. Polymer obtained by free-radical precipitation polymerization, in a polymerization solvent, of at least two monomers A and B:

   - the monomer A being selected from the group consisting of: hydrophilic non-ionic monomers, anionic hydrophilic monomers, cationic hydrophilic monomers, zwitterionic hydrophilic monomers, hydrophobic monomers and mixtures thereof; and
   - the monomer B being a cyclic monomer selected from the group consisting of: cyclic ketene acetals, thionolactones and mixtures thereof;

   the polymerization solvent being an alcohol containing from 1 to 4 carbon atoms and containing at least 0.5% by weight to up to 10% by weight of water relative to the total weight of the polymerization solvent.

9. Polymer according to claim 8, *characterized* **in that** monomer B is a cyclic ketene acetal chosen from: 2-methylene-1,3-dioxepane, 5,6-benzo-2-methylene-1,3-dioxepane, 2-methylene-4-phenyl-1,3-dioxolane, 2-methylene-1,3,6-trioxocane, and mixtures thereof.

10. Polymer according to claim 8, *characterized* **in that** the monomer B is a thionolactone chosen from: dibenzo[c,e]oxepine(7H)-5-thione, ε-thionocaprolactone, 3,3-dimethyl-2,3-dihydro-5H-benzo[e][1,4]dioxepine-5-thione and mixtures thereof.

11. Use of a polymer according to any one of claims 8 to 10 in: hydrocarbon recovery (oil or gas); drilling wells; cementing wells; stimulation of hydrocarbon wells (oil or gas), for example hydraulic fracturing; conformance; diversion; open, closed or semi-closed circuit water treatment; treatment of fermentation broth; sludge treatment; construction; paper or cardboard manufacture; batteries; wood treatment; treatment of hydraulic composition (concrete, cement, mortar and aggregates); mining; formulation of cosmetic products; formulation of detergents; textile manufacture; geothermal energy; manufacture of diapers; or agriculture.

12. Use of a polymer according to any one of claims 8 to 10 as a flocculant, coagulant, binding agent, fixing agent, viscosity reducing agent, thickening agent, absorbent agent, friction reducing agent, draining agent, filler retention agent, dehydrating agent, conditioning agent, stabilising agent, film-forming agent, sizing agent, superplasticizing agent, clay inhibitor or dispersant.

**Patentansprüche**

1. Verfahren zur Herstellung eines Polymers durch radikalische Polymerisation durch Ausfällung von mindestens zwei Monomeren A und B in einem Polymerisationslösungsmittel:

   - wobei das Monomer A ausgewählt wird aus der Gruppe bestehend aus nichtionischen, hydrophilen Monomeren, anionischen, hydrophilen Monomeren, kationischen, hydrophilen Monomeren, zwitterionischen, hydrophilen Monomeren, hydrophoben Monomere und Mischungen davon; und
   - wobei das Monomer B ein zyklisches Monomer ist, ausgewählt aus der Gruppe bestehend aus zyklischen Ketenacetalen, Thionolactonen und Mischungen davon;

   wobei das Polymerisationslösungsmittel ein Alkohol mit 1 bis 4 Kohlenstoffatomen ist und mindestens 0,5 Gew.-% bis zu 10 Gew.-% Wasser, bezogen auf das Gesamtgewicht des Polymerisationslösungsmittels, enthält.

2. Verfahren nach Anspruch 1, *dadurch gekennzeichnet,* **dass** der Alkohol mit 1 bis 4 Kohlenstoffatomen aus der Gruppe ausgewählt wird, die aus Ethanol, 1-Propanol, 2-Methyl-1-propanol, tert-Butanol, 1-Butanol, 2-Butanol und Mischungen davon besteht.

3. Verfahren nach einem der vorstehenden Ansprüche, *dadurch gekennzeichnet,* **dass** das Polymerisationslösungsmittel eine Mischung aus Wasser und tert-Butanol ist.

4. Verfahren nach einem der vorstehenden Ansprüche, *dadurch gekennzeichnet,* **dass** das Polymerisationslösungsmittel aus 95 bis 98 Gew.-% eines $C_1$-$C_4$-Alkohols und 2 bis 5 Gew.-% Wasser, bezogen auf das Gesamtgewicht des Polymerisationslösungsmittels, besteht.

5. Verfahren nach einem der vorstehenden Ansprüche, *dadurch gekennzeichnet,* **dass** das radikalische Polymerisationsverfahren durch Ausfällung durch eine Azoverbindung initiiert wird.

6. Verfahren nach einem der vorstehenden Ansprüche, *dadurch gekennzeichnet,* **dass** das Monomer B ein zyklisches Ketenacetal ist, ausgewählt aus der Gruppe bestehend aus: 2-Methylen-1,3-dioxepan, 5,6-Benzo-2-methylen-1,3-dioxepan, 2-Methylen-4-phenyl-1,3-dioxolan, 2-Methylen-1,3,6-trioxokan und Mischungen davon.

7. Verfahren nach einem der Ansprüche 1 bis 6, *dadurch gekennzeichnet,* **dass** das Monomer B ein Thionolacton ist, ausgewählt aus der Gruppe bestehend aus:
   Dibenzo[c,e]oxepin(7H)-5-thion, e-Thionocaprolacton, 3,3-Dimethyl-2,3-dihydro-5H-benzo[e][1,4]dioxepin-5-thion und Mischungen davon.

8. Polymer, erhalten durch freie radikalische Fällungspolymerisation in einem Polymerisationslösungsmittel von mindestens zwei Monomeren A und B:

   - wobei das Monomer A aus der Gruppe ausgewählt wird, die aus hydrophilen nichtionischen Monomeren, anionischen, hydrophilen Monomeren, kationischen, hydrophilen Monomeren, zwitterionischen, hydrophilen Monomeren, hydrophoben Monomeren und Mischungen davon besteht; und

- wobei das Monomer B ein zyklisches Monomer ist, ausgewählt aus der Gruppe bestehend aus zyklischen Ketenacetalen, Thionolactonen und Mischungen davon;

wobei das Polymerisationslösungsmittel ein Alkohol mit 1 bis 4 Kohlenstoffatomen ist und mindestens 0,5 Gew.-% bis zu 10 Gew.-% Wasser, bezogen auf das Gesamtgewicht des Polymerisationslösungsmittels, enthält.

9. Polymer nach Anspruch 8, *dadurch gekennzeichnet,* **dass** das Monomer B ein zyklisches Ketenacetal ist, ausgewählt aus 2-Methylen-1,3-dioxepan, 5,6-Benzo-2-methylen-1,3-dioxepan, 2-Methylen-4-phenyl-1,3-dioxolan, 2-Methylen-1,3,6-trioxokan und Mischungen davon.

10. Polymer nach Anspruch 8, *dadurch gekennzeichnet,* **dass** das Monomer B ein Thionolacton ist, ausgewählt aus: Dibenzo[c,e]oxepin(7H)-5-thion, e-Thionocaprolacton, 3,3-Dimethyl-2,3-dihydro-5H-benzo[e][1,4]dioxepin-5-thion und Mischungen davon.

11. Verwendung eines Polymers gemäß einem der Ansprüche 8 bis 10 in der Kohlenwasserstoffgewinnung (Öl oder Gas); Bohrungen; Zementierung von Bohrlöchern; Stimulation von Kohlenwasserstoffbohrlöchern (Öl oder Gas), beispielsweise durch hydraulic Fracturing; Konformität; Umleitung; Wasseraufbereitung in offenen, geschlossenen oder halbgeschlossenen Kreisläufen; Behandlung von Fermentationsbrühen; Schlammbehandlung; Bauwesen; Papier- oder Kartonherstellung; Batterien; Holzbehandlung; Behandlung von hydraulischen Zusammensetzungen (Beton, Zement, Mörtel und Zuschlagstoffe); Bergbau; Formulierung von Kosmetikprodukten; Formulierung von Reinigungsmitteln; Textilherstellung; Geothermie; Herstellung von Windeln; oder Landwirtschaft.

12. Verwendung eines Polymers gemäß einem der Ansprüche 8 bis 10 als Flockungsmittel, Koagulierungsmittel, Bindemittel, Fixiermittel, Viskositätsreduktionsmittel, Verdickungsmittel, Absorptionsmittel, Reibungsreduktionsmittel, Entwässerungsmittel, Füllstoffrückhaltemittel, Dehydratisierungsmittel, Konditionierungsmittel, Stabilisierungsmittel, Filmbildungsmittel, Leimungsmittel, Superplastifizierungsmittel, Toninhibitor oder Dispergiermittel.

## Revendications

1. Procédé de préparation d'un polymère par polymérisation radicalaire par précipitation, dans un solvant de polymérisation, d'au moins deux monomères A et B :

- le monomère A étant choisi dans le groupe constitué de : monomères non-ioniques hydrophiles, monomères anioniques hydrophiles, monomères cationiques hydrophiles, monomères zwitterioniques hydrophiles, monomères hydrophobes et leurs mélanges ; et
- le monomère B étant un monomère cyclique choisi dans le groupe constitué de : les acétals de cétènes cycliques, les thionolactones, et leurs mélanges ;

le solvant de polymérisation étant un alcool comprenant 1 à 4 atomes de carbone et contenant au moins 0,5% en poids et jusqu'à 10% en poids d'eau par rapport au poids total du solvant de polymérisation.

2. Procédé selon la revendication *1, caractérisé* **en ce que** l'alcool comprenant 1 à 4 atomes de carbone est choisi dans le groupe constitué de : éthanol, 1-propanol, 2-méthyl-1 propanol, tert-butanol, 1-butanol, 2-butanol et leurs mélanges.

3. Procédé selon l'une des revendications précédentes, *caractérisé* **en ce que** le solvant de polymérisation est un mélange d'eau et de tert-butanol.

4. Procédé selon l'une des revendications précédentes, *caractérisé* **en ce que** le solvant de polymérisation consiste en 95 à 98% d'un alcool en $C_1$-$C_4$ et de 2 à 5% d'eau, en poids par rapport au poids total du solvant de polymérisation.

5. Procédé selon l'une des revendications précédentes, *caractérisé* **en ce que** la polymérisation radicalaire par précipitation est amorcé par un composé azoïque.

6. Procédé selon l'une des revendications précédentes, *caractérisé* **en ce que** le monomère B est un acétal de cétène cyclique choisi dans le groupe constitué de : 2-méthylène-1,3-dioxepane, 5,6-benzo-2-méthylène-1,3-dioxepane, 2-méthylène-4-phenyl-1,3-dioxolane, 2-méthylène-1,3,6-trioxocane et leurs mélanges.

**7.** Polymère selon l'une des revendications 1 à 6, *caractérisé* **en ce que** le monomère B est une thionolactone choisie dans le groupe constitué de : dibenzo[c,e]oxepine(7H)-5-thione, ε-thionocaprolactone, 3,3-dimethyl-2,3-dihydro-5H-benzo[e][1,4]dioxepine-5-thione et leurs mélanges.

**8.** Polymère obtenu par polymérisation radicalaire par précipitation, dans un solvant de polymérisation, d'au moins deux monomères A et B :

- le monomère A étant choisi dans le groupe constitué de : monomères non-ioniques hydrophiles, monomères anioniques hydrophiles, monomères cationiques hydrophiles, monomères zwitterioniques hydrophiles, monomères hydrophobes et leurs mélanges ; et
- le monomère B étant un monomère cyclique choisi dans le groupe constitué de : les acétals de cétènes cycliques, les thionolactones, et leurs mélanges ;

le solvant de polymérisation étant un alcool comprenant 1 à 4 atomes de carbone et contenant au moins 0,5% en poids et jusqu'à 10% en poids d'eau par rapport au poids total du solvant de polymérisation.

**9.** Polymère selon la revendication 8, *caractérisé* **en ce que** le monomère B est un acétal de cétène cyclique choisi parmi : le 2-méthylène-1,3-dioxepane, le 5,6-benzo-2-méthylène-1,3-dioxepane, le 2-méthylène-4-phenyl-1,3-dioxolane, le 2-méthylène-1,3,6-trioxocane et leurs mélanges.

**10.** Polymère selon la revendication 8, *caractérisé* **en ce que** le monomère B est une thionolactone choisie dans le groupe constitué de : dibenzo[c,e]oxepine(7H)-5-thione, ε-thionocaprolactone, 3,3-dimethyl-2,3-dihydro-5Hbenzo[e][1,4]dioxepine-5-thione et leurs mélanges.

**11.** Utilisation d'un polymère selon l'une des revendications 8 à 10 dans : la récupération d'hydrocarbures (pétrole ou gaz) ; le forage de puits ; la cimentation de puits ; la stimulation de puits d'hydrocarbures (pétrole ou gaz), par exemple la fracturation hydraulique ; la conformance ; la diversion ; le traitement de l'eau en circuit ouvert, fermé ou semi fermé ; le traitement des mouts de fermentation ; le traitement des boues ; la construction ; la fabrication de papier ou de carton ; le domaine des batteries ; le traitement du bois ; le traitement de composition hydraulique (béton, ciment, mortier et agrégats) ; l'industrie minière ; la formulation de produits cosmétiques ; la formulation de détergents ; la fabrication du textile ; la géothermie ; la fabrication de couche hygiénique ; ou l'agriculture.

**12.** Utilisation d'un polymère selon l'une des revendications 8 à 10 comme floculant, coagulant, agent liant, agent fixateur, agent réducteur de viscosité, agent épaississant, agent absorbant, agent réducteur de friction, agent d'égouttage, agent de rétention de charge, agent de déshydratation, agent conditionneur, agent stabilisant, agent filmogène, agent d'encollage, agent superplastifiant, inhibiteur d'argile ou dispersant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 103467728
- JP H11228633 B
- WO 2023078534 A
- WO 2023075696 A
- JP 2000038595 A

### Non-patent literature cited in the description

- **DAI GUOXIONG et al.** Biodegradable poly(ester)-poly(methyl methacrylate) copolymer for marine anti-biofouling. *Process In Organic Coatings*, 2018, vol. 124, 55-60
- **BINGHAM**. Synthesis and Polymerisation of Novel Monomers for Radical RingOpening Polymerisation. *Thesis*, 2020, 1-278
- **UNDIN et al.** Copolymerization of 2-Methylene-1,3-dioxepane and Glycidyl Methacrylate, a Well-Defined and Efficient Process for Achieving Functionalized Polyesters for Covalent Binding of Bioactive Molecules. *Biomacromolecules*, 2013, vol. 14 (6), 2095-2102
- **BINGRAM et al.** Thioester-Functional Polyacrylamides: Rapid Selective Backbone Degradation Triggers Solubility Switch Based on Aqueous Lower Critical Solution Temperature/Upper Critical Solution Temperature. *Acs Applied Polymer Materials*, 2020, vol. 2 (8), 3440-3449
- **GRIFFIN WC**. Classification of Surface-Active Agents by HLB. *Journal of the Society of Cosmetic Chemists*, 1949, vol. 1, 311-326